# EUROPEAN PATENT SPECIFICATION

(11) **EP 2 875 973 B1**
(45) Date of publication and mention of the grant of the patent: **01.04.2020**
(21) Application number: 14194215.1
(22) Date of filing: 20.11.2014
(51) Int. Cl.: B60G 3/02, B60B 33/04, B60G 17/005

(54) **SUSPENSION FOR A TRAILER**
AUFHÄNGUNG FÜR EINEN ANHÄNGER
SUSPENSION POUR REMORQUE

(30) Priority: 20.11.2013 IT TO20130937
(43) Date of publication of application: 27.05.2015
(73) Proprietor: COMETTO S.p.A., 12011 Borgo San Dalmazzo (IT)
(72) Inventor: Lippi, Fabrizio, 12010 VIGNOLO (IT); Terzuolo, Pierluigi, 12100 CUNEO (IT)
(74) Representative: Boggio, Luigi

(56) References cited:
- FR-A1- 2 333 660
- FR-A1- 2 927 036
- US-A- 4 823 896
- US-A- 6 116 698
- US-A1- 2001 026 753
- US-A1- 2002 190 492

## Description

The present invention relates to a trolley for trailers.

In the field of transport with wheeled vehicles, it is known to use trailers comprising a frame defining a load platform and a plurality of wheeled trolleys, each of which is suitably coupled to the frame by a respective mechanical fifth wheel with a vertical axis and comprising a wheeled axle and a hydraulic suspension interposed between the fifth wheel and the axle.

Various types of suspensions are known to date, including the so-called "compass" suspensions, which comprise a rigid connection structure stably connected to the fifth wheel and projecting towards the rolling plane of the axle, and an oscillating support arm cantilevered extending from the structure. Specifically, the arm has one end hinged to an end portion of the structure adjacent to the rolling plane to oscillate about a hinge axis and an opposite end portion coupled to the axle.

The suspension comprises, then, a hydraulic jack for driving and controlling the oscillation of the arm and then of the axle between a retracted position, wherein the axle is arranged in a position close to the bearing plane and a operational spaced position.

In the known solutions of the type defined above, the jack is placed basically vertically and has a jacket hinged to the structure beneath and in a position close to the load platform and a rod coupled to an intermediate portion of the arm comprised between the axle and the aforementioned hinge axis.

Although they are used, the known suspensions of the type described above do not allow to increase the stroke of the axle over a set threshold value which is practically imposed by the length and by the transverse dimensions of the cylinder, i.e. the bore thereof. In fact, the stroke of the axle increases as the length or stroke of the jack increases, the length of the arm being equal. As the stroke increases, however, the length of the jack also increases when the latter is in the condition of minimum extension, therefore, the distance of the axle from the load platform increases when the axle is in its retracted position. In other words, the suspension is less compact when arranged in the retracted position thereof.

Similarly, the length of the jack being equal, the stroke increases as the length of the arm increases, but this entails an inevitable increase of the bore of the jack that again limits the compaction of the suspension when the axle is in its retracted position. The length of the arm then results in a general increase in the longitudinal direction dimensions of the trolley.
US 2001/0026753 discloses a trailer having rear wheels pivoting about a vertical axes and about a respective horizontal axis to enable displacing of a rear portion of a loading plate onto the rolling surface of the wheel.
US 4 823 896 A discloses a retractable undercarriage having a flexible pins between a fixed structure and an oscillating arm and between the oscillating arm and the wheeled axle.
The object of the present invention is to provide a trolley for trailers, which allows to solve in a simple and inexpensive way the above mentioned problems and, in particular, a trolley, the suspension of which has a stroke greater than that of the known suspensions having the same dimensions and a reasonable price.

According to the present invention a trolley for a trailer as claimed in claim 1 is provided.

The invention will now be described with reference to the accompanying drawings, which illustrate a non-limitative embodiment, wherein:
Figure 1 shows, in side elevation and substantially in blocks with parts removed for clarity, a trolley according to the teachings of the present invention associated with a trailer which is partially shown; and
Figure 2 is a figure similar to Figure 1 and it illustrates the trolley in a different functional condition.

In the attached figures, 1 indicates, as a whole, a wheeled trailer comprising a frame 2 defining a load platform 3 and a plurality of wheeled trolleys 4, only one of which is visible in the attached figures, arranged close to each other beneath the frame 2.

Each trolley 4 comprises an axle 5, which has its own axis 6 and comprises, in turn, an intermediate connection portion 7 coaxial with the axis 6. From the portion 7, in opposite directions and in a known way, two hubs 8 extend for respective tired wheels 9, only one of which is visible in the attached figures, coaxial with axis 6 and rotatable, in use, around the axis 6 itself and in contact with a rolling plane P.

Again with reference to the attached figures, the trolley 4 also comprises a hydraulic suspension system 11, of compass type and, in turn, comprising a rigid frame 12 connected to the frame 2 by way of a fifth wheel 13 having a vertical axis 14.

The frame 12 comprises, in turn, a coupling portion 15 connected, in a known manner, to the fifth wheel and, therefore, in position adjacent to the load platform 3 and a support structure 16, which extends towards the rolling plane P from the coupling portion 15 and ends with a portion 18 adjacent the plane P itself.

Each hydraulic suspension 11 also comprises a pair of arms 19, only one of which is visible in the accompanying figures and comprises an end portion 20 coupled to an end segment 21 of the portion 18 by means of a joint 20A of the elastic or spherical type adapted to allow the rotation of the arms about a fulcrum axis 22 parallel to the axis 6 and to the load platform 3 in conditions of parallelism of the load plane 3 and of the rolling plane P and to allow, when necessary, also an oscillation of the wheel hub 7 about a longitudinal axis 22A perpendicular to the axes 6 and 22.

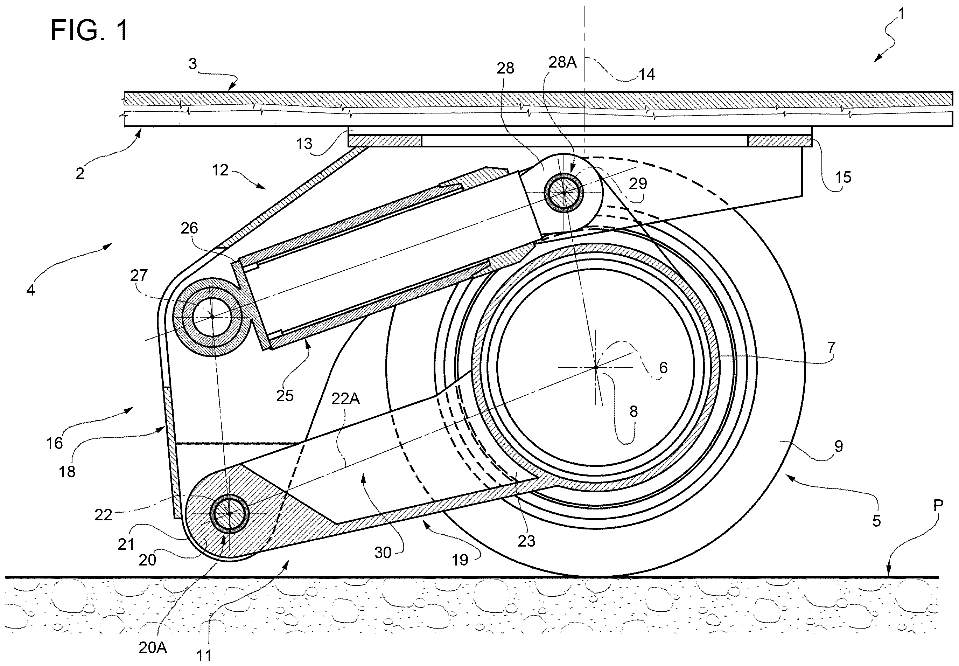

As can be seen from Figure 1, the arms 19 and the portions 7 and 20 constitute part of a body formed in one piece, and of which the arms 19 and the portion 20 define a single appendix that extends radially cantilevered from the portion 7 thus reducing the number of components and the manufacturing costs.

Each arm 19 has, then, an end portion 23 opposite end coupled to the portion 7. The portion 23 is connected integrally to the portion 7.

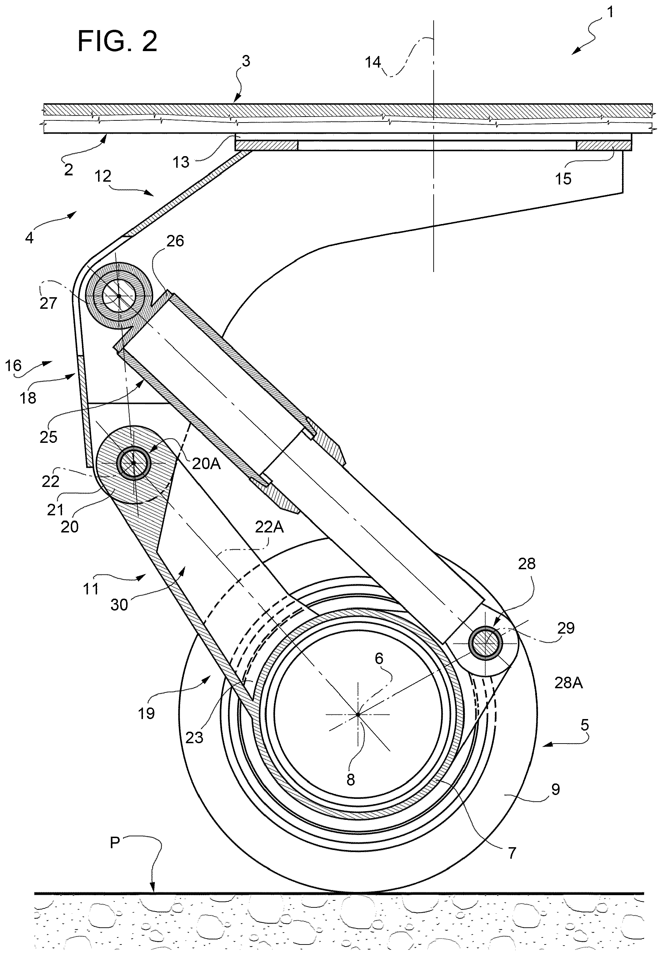

With reference still to the attached figures, the suspension 4 also comprises a double-acting hydraulic jack 25 interposed between the portions 7 and 18 for simultaneously rotating the arms 19 about the fulcrum axis 22 between two extreme functional stop positions and one of which is retracted, as illustrated in Figure 1, wherein the wheels 9 are arranged closed to the coupling portion 15, to the fifth wheel 13 and to the load platform 3 and an advanced or extended position, as illustrated in figure 2.

The jack 25 has a jacket 26 hinged to a top end of the portion 18 for rotating about a hinge axis 27 orthogonal to the axis 14 and placed above the axis 22 and a rod 28. The rod 28 is coupled to the portion 7 to rotate at least about a hinge axis 29 arranged above the axis 6 and, suitably, on the outside of the portion 7. Te portion 28 is coupled to the portion 7 by a ball joint 28A or another equivalent joint adapted to allow rotation around the axis 29 and about axes perpendicular to the axis 29 itself.

The height position of the axis 27 is determined so that the axis 29 is arranged in a raised position with respect to the axis 27 when the arms 19 are arranged in the retracted position thereof (Fig.1).

When the arms 19 are, instead, arranged in the stop extracted position thereof (Figure 2), the axis 29 is arranged on the opposite side of a vertical lying plane of the axis 6 and parallel to the axes 6, 22 and 27 with respect to the axis 22 itself. In said extracted position, therefore, the axes 22 and 27 are arranged superimposed and on a same side of the cited vertical plane, while the axis 29 is arranged on the other side of the same vertical plane.

In reference still to the attached figures, the axes 6, 22, 27 and 29 each intersect a respective vertex of an articulated quadrilateral 30, suitably with substantially parallel sides when the arms are arranged in their retracted position (Fig.1). In said quadrilateral, the hydraulic jack 25 and the arms 19 extend parallel to the larger sides of the same quadrilateral, while the distance between the axes 6 and 29 is, suitably, less than the radius of the wheels 9.

From the foregoing it appears evident that the particular inclination of the jack 14 with respect to the axis of the fifth wheel 13 allows, compared to the known solutions, to easily increase the stroke of the axle 5 and, therefore, of the wheels 9, especially when the wheels 9 themselves have limited diameters. In particular, the inclined arrangement of the jack 25 poses no substantial limits to the elongation of the arms 19, since between the hub 7 and the portion 15 there is always a sufficient space to house the jack 25 also in conditions of high bores of the same. At the same time, the length of the arms 19 being equal, it is possible to increase the stroke by using jacks of greater length without the latter protruding beyond the lower end of the frame 11 as it would be, instead, in the existing solutions with a practically vertical cylinder.

From the foregoing it appears evident that the described trolley 4 can be modified and varied. In particular, the trolley 4 could comprise a different number of wheels 9, a different number of arms 19 and/or a frame 12.
Furthermore, between the jacket 26 and the support structure 16 a joint similar to the joint 28A or different but always such as to allow rotation about the axis 27 and about an axis orthogonal to the axes 27, 29 and 6, is interposed.

## Claims

1. A trolley (4) for a trailer (1) comprising a wheeled axle (5) comprising a connection portion (7) and wheels (9) coupled to the connection portion (7) for rotating about an axis (6) of rotation thereof, and a suspension (12) comprising a portion (15) for coupling to the trailer in position adjacent to a load platform (2) of the trailer, a cantilever support structure (16) extending from said coupling portion (15) towards a rolling surface (P) of the wheel (9), at least an oscillating arm (19) having a first end coupled to said support structure (16) by a first joint (20A) for rotating about at least one fulcrum axis (22) and a second end opposite firmly connected to the connection portion (7) of said axle (5), and a hydraulic jack (25) for rotating said oscillating arm (19) at least about said fulcrum axis (22) from and towards a retracted stop position thereof, wherein the wheel (9) is arranged close to said coupling portion (15); said jack (25) having a first end coupled to said support structure (16) to rotate about at least a first hinge axis (27); said jack (25) having a second end coupled to said connection portion (7) by second joint (28A) for rotating about at least one second hinge axis (29) arranged above said axis (6) of rotation and in a raised position with respect to said first hinge axis (27) when said arm (19) is arranged in said retracted position; **characterized in that**, said first joint (20A) is a spherical type joint to allow said arm (19) to rotate about at least a further axis (22A) orthogonal to the hinge axis (22) and to said axis (6) of rotation and intersecting said fulcrum axis (22) and said axis (6) of rotation, and a **in that** said second joint (28A) is a ball joint adapted to allow the rotation of said second end about at least one axis orthogonal to said second hinge axis (29).

2. The trolley according to claim 1, **characterized in that** said first and said second hinge axes (27) (29), said fulcrum axis (22) and said axis of rotation (6) each intersect a respective vertex of a articulated quadrilateral with substantially parallel sides when said arm (19) is arranged in said retracted position.

3. The trolley according to claim 1 or 2, **characterized in that** said first and said second hinge axes (27) (29), said fulcrum axis (22) and said axis of rotation (6) each intersect a respective vertex of a articulated quadrilateral and **in that** said hydraulic jack (25) and said arm (19) extend parallel to the larger sides of said articulated quadrilateral.

4. The trolley according to any one of the preceding claims, **characterized in that** said support structure (16) comprises a free end portion (21) adjacent to said rolling surface (P) and **in that** said fulcrum axes (22) and said first hinge axis (27) cross said end portion.

5. The trolley according to any one of the preceding claims, **characterized in that** said second hinge axis (29) is arranged on the opposite side of a lying plane of the axis of rotation (6) and parallel to the first hinge axis 27) and to said fulcrum axis (22) with respect to the first hinge axis (27) and to said fulcrum axis (22) when said arm (19) is arranged in a separated stop position thereof.

6. The trolley according to any one of the preceding claims, **characterized in that** said axis of rotation (6) and said second hinge axis (29) are at a smaller distance from each other than the outer radius of said wheel (9).

7. The trolley according to any one of the preceding claims, **characterized in that** it comprises means of relative mobility interposed between said first end of said jack (25) and said support structure (16) to allow said axle (5) to rotate about said first hinge axis (27) and around an axis perpendicular to said first hinge axis and to the axis of rotation (6) of said wheel (9).

8. The trolley according to claim 7, **characterized in that** said relative mobility means comprise a joint interposed between said first end of said jack (25) and said support structure (16).

9. The trolley according to any one of the preceding claims, **characterized in that** said arms (16) and said connection portion (7) are part of a body formed in one piece.

## Patentansprüche

1. Trolley (4) für einen Anhänger (1), umfassend eine Radachse (5), die einen Verbindungsabschnitt (7) und mit dem Verbindungsabschnitt (7) zum Drehen desselben um eine Drehachse (6) gekoppelte Räder (9) umfasst, und eine Aufhängung (12), die einen Abschnitt (15) zum Ankoppeln an den Anhänger in einer Position benachbart zu einer Ladeplattform (2) des Anhängers umfasst, eine Auslegerstützstruktur (16), die sich von dem Kopplungsabschnitt (15) in Richtung einer Rollfläche (P) des Rades (9) erstreckt, mindestens einen Schwingarm (19) mit einem mit der Stützstruktur (16) durch ein erstes Gelenk (20A) zum Drehen um mindestens eine Drehpunktachse (22) gekoppelten ersten Ende, und einem gegenüberliegend mit dem Verbindungsabschnitt (7) der Achse (5) fest verbundenen zweiten Ende, und einen hydraulischen Heber (25) zum Drehen des Schwingarms (19) mindestens um die Drehpunktachse (22) von und in Richtung einer eingezogenen Haltestellung davon, wobei das Rad (9) nahe dem Kopplungsabschnitt (15) angeordnet ist; der Heber (25) ein mit der Stützstruktur (16) gekoppeltes erstes Ende aufweist, um sich um mindestens eine erste Scharnierachse (27) zu drehen; der Heber (25) ein zweites Ende aufweist, das mit dem Verbindungsabschnitt (7) durch ein zweites Gelenk (28A) zum Drehen um mindestens eine zweite Scharnierachse (29) gekoppelt ist, die oberhalb der Drehachse (6) und in einer angehobenen Position mit Bezug auf die erste Scharnierachse (27) angeordnet ist, wenn der Arm (19) in der eingezogenen Position angeordnet ist; **dadurch gekennzeichnet, dass** das erste Gelenk (20A) ein kugelförmiges Gelenk ist, um dem Arm (19) zu ermöglichen, sich um mindestens eine weitere Achse (22A) orthogonal zur Scharnierachse (22) und zur Drehachse (6) zu drehen und die Drehpunktachse (22) und die Drehachse (6) zu schneiden, und dass das zweite Gelenk (28A) ein Kugelgelenk ist, das angepasst ist, um die Drehung des zweiten Endes um mindestens eine Achse orthogonal zur zweiten Scharnierachse (29) zu ermöglichen.

2. Trolley nach Anspruch 1, **dadurch gekennzeichnet, dass** die erste und die zweite Scharnierachse (27) (29), die Drehpunktachse (22) und die Drehachse (6) jeweils einen jeweiligen Eckpunkt eines gelenkigen Vierecks mit im Wesentlichen parallelen Seiten schneiden, wenn der Arm (19) in der eingezogenen Position angeordnet ist.

3. Trolley nach Anspruch 1 oder 2, **dadurch gekennzeichnet, dass** die erste und die zweite Scharnierachse (27) (29), die Drehpunktachse (22) und die Drehachse (6) jeweils einen jeweiligen Eckpunkt eines gelenkigen Vierecks schneiden, und dass sich der hydraulische Heber (25) und der Arm (19) parallel zu den größeren Seiten des gelenkigen Vierecks erstrecken.

4. Trolley nach einem der vorangehenden Ansprüche, **dadurch gekennzeichnet, dass** die Stützstruktur (16) einen freien Endabschnitt (21) benachbart zur Rollfläche (P) umfasst, und dass die Drehpunktachsen (22) und die erste Scharnierachse (27) den Endabschnitt kreuzen.

5. Trolley nach einem der vorangehenden Ansprüche, **dadurch gekennzeichnet, dass** die zweite Scharnierachse (29) auf der gegenüberliegenden Seite einer liegenden Ebene der Drehachse (6) und parallel zur ersten Scharnierachse (27) und zur Drehpunktachse (22) mit Bezug auf die erste Scharnierachse (27) und die Drehpunktachse (22) angeordnet ist, wenn der Arm (19) in einer getrennten Halteposition davon angeordnet ist.

6. Trolley nach einem der vorangehenden Ansprüche, **dadurch gekennzeichnet, dass** der Abstand der Drehachse (6) und der zweiten Scharnierachse (29) voneinander geringer ist als der Außenradius des Rades (9).

7. Trolley nach einem der vorangehenden Ansprüche, **dadurch gekennzeichnet, dass** er Mittel zur relativen Mobilität umfasst, die zwischen dem ersten Ende des Hebers (25) und der Stützstruktur (16) angeordnet sind, um der Achse (5) zu ermöglichen, sich um die erste Scharnierachse (27) und um eine Achse senkrecht zur ersten Scharnierachse und zur Drehachse (6) des Rades (9) zu drehen.

8. Trolley nach Anspruch 7, **dadurch gekennzeichnet, dass** die Mittel zur relativen Mobilität ein zwischen dem ersten Ende des Hebers (25) und der Stützstruktur (16) angeordnetes Gelenk umfassen.

9. Trolley nach einem der vorangehenden Ansprüche, **dadurch gekennzeichnet, dass** die Arme (16) und der Verbindungsabschnitt (7) Teil eines in einem Stück geformten Körpers sind.

## Revendications

1. Chariot (4) pour une remorque (1) comprenant un essieu à roues (5) comprenant une partie de raccordement (7) et des roues (9) couplées à la partie de raccordement (7) pour tourner autour de son axe (6) de rotation, et une suspension (12) comprenant une partie (15) pour se coupler à la remorque dans une position adjacente à une plateforme de chargement (2) de la remorque, une structure de support en porte-à-faux (16) s'étendant à partir de ladite partie de couplage (15) vers une surface de roulement (P) de la roue (9), au moins un bras oscillant (19) ayant une première extrémité couplée à ladite structure de support (16) par un premier joint (20A) pour tourner autour d'au moins un axe de pivot (22) et une seconde extrémité opposée fermement raccordée à la partie de raccordement (7) dudit essieu (5), et un vérin hydraulique (25) pour faire tourner ledit bras oscillant (19) au moins autour dudit axe de pivot (22) à partir de et vers sa position d'arrêt rétractée, la roue (9) étant agencée à proximité de ladite partie de couplage (15) ; ledit vérin (25) ayant une première extrémité couplée à ladite structure de support (16) pour tourner autour d'au moins un premier axe de charnière (27) ; ledit vérin (25) ayant une seconde extrémité couplée à ladite partie de raccordement (7) par un second joint (28A) pour tourner autour d'au moins un second axe de charnière (29) agencé au-dessus dudit axe (6) de rotation et dans une position levée par rapport audit premier axe de charnière (27) lorsque ledit bras (19) est agencé dans ladite position rétractée ; **caractérisé en ce que** ledit premier joint (20A) est un joint de type sphérique pour permettre audit bras (19) de tourner autour d'au moins un autre axe (22A) orthogonal par rapport à l'axe de charnière (22) et audit axe (6) de rotation et coupant ledit axe de pivot (22) et ledit axe (6) de rotation, et **en ce que** ledit second joint (28A) est un joint à rotule adapté pour permettre la rotation de ladite seconde extrémité autour d'au moins un axe orthogonal audit second axe de charnière (29).

2. Chariot selon la revendication 1, **caractérisé en ce que** ledit premier et ledit second axe de charnière (27) (29), ledit axe de pivot (22) et ledit axe de rotation (6) se coupent à un sommet respectif d'un quadrilatère articulé avec des côtés sensiblement parallèles lorsque ledit bras (19) est agencé dans ladite position rétractée.

3. Chariot selon la revendication 1 ou 2, **caractérisé en ce que** ledit premier et ledit second axe de charnière (27) (29), ledit axe de pivot (22) et ledit axe de rotation (6) coupent chacun un sommet respectif d'un quadrilatère articulé et **en ce que** ledit vérin hydraulique (25) et ledit bras (19) s'étendent parallèlement aux plus grands côtés dudit quadrilatère articulé.

4. Chariot selon l'une quelconque des revendications précédentes, **caractérisé en ce que** ladite structure de support (16) comprend une partie d'extrémité libre (21) adjacente à ladite surface de roulement (P) et **en ce que** lesdits axes de pivot (22) et ledit premier axe de charnière (27) traversent ladite partie d'extrémité.

5. Chariot selon l'une quelconque des revendications précédentes, **caractérisé en ce que** ledit second axe de charnière (29) est agencé sur le côté opposé d'un plan horizontal de l'axe de rotation (6) et parallèle au premier axe de charnière (27) et audit axe de pivot (22) par rapport au premier axe de charnière (27) et audit axe de pivot (22), lorsque ledit bras (19) est agencé dans sa position d'arrêt séparée.

6. Chariot selon l'une quelconque des revendications précédentes, **caractérisé en ce que** ledit axe de rotation (6) et ledit second axe de charnière (29) sont à une plus petite distance l'un de l'autre que le rayon externe de ladite roue (9).

7. Chariot selon l'une quelconque des revendications précédentes, **caractérisé en ce qu'**il comprend un moyen de mobilité relative intercalé entre ladite première extrémité dudit vérin (25) et ladite structure de support (16) pour permettre audit essieu (5) de tourner autour dudit premier axe de charnière (27) et autour d'un axe perpendiculaire audit premier axe de charnière et à l'axe de rotation (6) de ladite roue (9).

8. Chariot selon la revendication 7, **caractérisé en ce que** ledit moyen de mobilité relative comprend un joint intercalé entre ladite première extrémité dudit vérin (25) et ladite structure de support (16).

9. Chariot selon l'une quelconque des revendications précédentes, **caractérisé en ce que** lesdits bras (16) et ladite partie de raccordement (7) font partie d'un corps formé d'un seul tenant.
